# EUROPÄISCHE PATENTSCHRIFT

(11) **EP 4 230 864 B1**
(45) Veröffentlichungstag und Bekanntmachung des Hinweises auf die Patenterteilung: **12.02.2025**
(21) Anmeldenummer: 22158095.4
(22) Anmeldetag: 22.02.2022
(51) Int. Cl.: F03D 13/25, F03D 13/40, B60P 3/40, B60P 7/12

(54) **ROHRSICHERUNGSSYSTEM FÜR SCHWERLASTFAHRZEUGE UND VERFAHREN ZUR LAGERUNG EINES ROHRS AUF EINEM SCHWERLASTFAHRZEUG**
TUBE SECURING SYSTEM FOR HEAVY DUTY VEHICLES AND METHOD OF SUPPORTING A TUBE ON A HEAVY DUTY VEHICLE
SYSTÈME DE FIXATION DE TUBE POUR VÉHICULES POIDS LOURDS ET PROCÉDÉ DE SUPPORT D'UN TUBE SUR UN VÉHICULE POIDS LOURDS

(43) Veröffentlichungstag der Anmeldung: 23.08.2023
(73) Patentinhaber: EEW Special Pipe Constructions GmbH, 18147 Rostock (DE)
(72) Erfinder: STASCHKO, Robert, 18147 Rostock (DE); SITZ, Ulrich, 18199 Rostock (DE)
(74) Vertreter: Bardehle Pagenberg Partnerschaft mbB Patentanwälte Rechtsanwälte

(56) Entgegenhaltungen:
- WO-A1-2011/098086
- DE-A1- 102012 018 575
- DE-U1- 202011 003 305
- DE-U1- 202014 000 615
- US-A1- 2019 285 057

## Beschreibung

Gegenstand der Erfindung ist ein Rohrsicherungssystem für Schwerlastfahrzeuge gemäß dem Oberbegriff von Anspruch 1 und in Verfahren zur Lagerung eines Rohrs auf einem Schwerlastfahrzeug gemäß dem Oberbegriff von Anspruch 11.

Großrohre, insbesondere aus längs- und rundnahtgeschweißten Stahlblechen, mit einem erheblichen Durchmesser finden beispielsweise beim Fundamentbau für Offshore-Anlagen, insbesondere Windkraftanlagen, Anwendung. Für Großrohre, die im Offshore-Bereich eingesetzt werden, z.B. als Monopiles oder Tripode, sind Rohrdurchmesser von größer 6 m und mittlerweile größer als 9 m keine Seltenheit mehr. Diese Großrohre haben ein hohes Eigengewicht von mehreren Tausend Tonnen und sind im Verhältnis zum Rohrdurchmesser sehr dünnwandig ausgebildet.

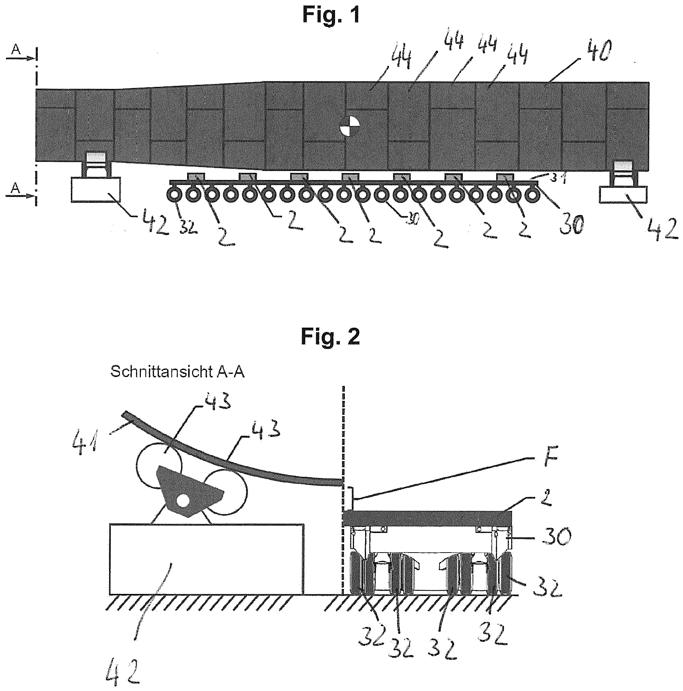

Die Transportfahrzeuge für solche Großrohre müssen daher eine ausreichende Tragfähigkeit aufweisen, um die sehr großen, langen und schweren Rohre tragen zu können. Der Transport der Rohre an Land erfolgt üblicherweise mit modularen Schwerlastfahrzeugen, sogenannten SPMT (Self-Propelled Modular Transporter). Beim Transport großer Rohre werden häufig mehrere der modularen Schwerlastfahrzeuge nebeneinander positioniert und miteinander verbunden. Eine Lastverteilung erfolgt z.B. mittels sogenannter Querträger, auf denen das Rohr abgelegt wird. Figur 1 zeigt ein modulares Schwerlastfahrzeug 30 mit mehreren Querträgern 2. Ein Querträger 2 baut oben auf dem modularen Schwerlastfahrzeug 30 auf und reduziert somit den Freiraum zwischen Querträger 2 und Rohrwandung 41. Das Rohr, das vor allem im Bereich der Lagerung, also im Mittenbereich des Rohrs, zusätzlich häufig in der Wanddicke reduziert ist, erfordert eine Lagerung, sodass sich das Rohr nicht durch sein Eigengewicht plastisch deformiert oder verformt wird. Diese führt zu Herausforderungen eine erforderliche Stützstruktur unter dem Rohr und auf den Querträgern zu platzieren, insbesondere beim Transport aus der Fertigung oder wenn das Rohr auf den Lagerböcken platziert wird.

Bekannt ist der Einsatz von mittig geteilten Lagerschalen, die mit Staplern seitlich unter das Rohr auf den Querträgern positioniert werden. Es erfordert somit einen gehörigen Platzbedarf und eine ausreichende Zugänglichkeit, um diese Lagerböcke mittels Staplern zu transportieren. Dieser Platz ist vor allem im Bereich der Fertigung häufig nicht vorhanden. Darüber hinaus ist die Zugänglichkeit ebenfalls eingeschränkt, da der Platz im Rohrschatten limitiert ist, um mit Staplern die Lagerböcke auf den Querträgern zu positionieren.

US 2005/0286985 A1 beschreibt ein System zur Stützung eines zylindrischen Objekts, wie eines Tanks. Die Stützen sind als seitliche Lagerböcke ausgeführt, wobei jede Stütze einen an den zylindrischen Gegenstand angrenzenden gekrümmten Teil und einen Basisabschnitt aufweist. Durch die Unabhängigkeit der Stützen und ihre Verstellbarkeit in Bezug auf den Sockel eignen sie sich für die Verwendung mit Tanks verschiedener Größen. Allerdings muss ausreichend Platz neben dem zylindrischen Objekt sein, um die Stützen unter dem Objekt platzieren zu können.

Aus EP 3 342 637 A1 ist ein Stützsystem für den Transport von Turmelementen einer Windkraftanlage bekannt. Das Stützsystem umfasst eine Halteklammer mit mehreren bogenförmigen und voneinander beabstandeten Schlitzen. Die Schlitze sind so geformt, dass sie einem an den Rohrelementen vorgesehenen Flansch entsprechen. In den Schlitzen werden Steckplatten angeordnet, die so geformt sind, dass sie den Löchern im Flansch entsprechen. Mit Schrauben und Muttern werden die Halteklammern am Rohr befestigt. Es kann eine Vielzahl von Halterungen verwendet werden, um das Stapeln der Rohre während des Transports zu ermöglichen. Die Halteklammern bieten eine hohe Sicherheit, sind aber aufwendig zu montieren und nur für Rohre mit Flansch geeignet und nicht für einen kurzzeitigen Einsatz z.B. beim Transport auf dem Fertigungsgelände konstruiert.

Die US 2019/285057 A1 offenbart ein gattungsgemäßes Rohrsicherungssystem für Schwerlastfahrzeuge.

Aufgabe der Erfindung ist es ein Rohrsicherungssystem für Schwerlastfahrzeuge und ein Verfahren für die Sicherung eines Rohrs mit dem Rohrsicherungssystem bereitzustellen, das die vorstehenden Nachteile überwindet und insbesondere für Rohre mit großen Durchmessern von mindestens 6 m geeignet ist, bei geringen Freiraum und geringen Platz und für einen kurzzeitigen Einsatz wie einen Transport oder eine Lagerung auf dem Fertigungsgelände einsetzbar ist und eine sichere und beschädigungsfreie Lagerung des Rohrs ermöglicht.

Die Aufgabe wird erfindungsgemäß durch ein Rohrsicherungssystem für Schwerlastfahrzeuge gemäß Patentanspruch 1 und ein Verfahren zur Lagerung eines Rohrs auf einem Schwerlastfahrzeuge gemäß Patentanspruch 11 gelöst.

Weitere Ausführungsformen sind Gegenstand der Unteransprüche oder nachfolgend beschrieben.

Das erfindungsgemäße Rohrsicherungssystem für Schwerlastfahrzeuge weist mindestens einen Auflageträger und mindestens eine Lagervorrichtung auf. Der Auflageträger ist zumindest teilweise plattenförmig oder quaderförmig ausgebildet und hat eine Gesamtbreite, die an die Gesamtbreite eines modularen Schwerlastfahrzeugs angepasst ist. Der Auflageträger hat eine Traglast von mindestens 500 t. Der Auflageträger besteht bevorzugt aus Metall, besonders bevorzugt aus Stahl und ist mit einer Sicherung gegen Verrutschen ausgestattet. Zum Transport kann der Auflageträger mit Anschlagmittel, wie Anschlagaugen versehen sein. Die Lagervorrichtung ist im Betriebszustand auf dem Auflageträger angeordnet. Die Lagervorrichtung ist eine Lagerschale. Die Lagerschale hat eine Unterseite und eine Oberseite und zwei schmale Querseiten. Die schmalen Querseiten verbinden die Unterseite und die Oberseite, wobei die Unterseite der Lagerschale eine Standfläche bildet und die Oberseite der Lagerschale eine rinnenförmige Ausnehmung aufweist, um ein liegendes Rohr auf zu nehmen. Die rinnenförmige Ausnehmung erstreckt sich zumindest teilweise zwischen den beiden Längsseiten der Lagerschale und die Längsachse der Rinne verläuft quer zur Längsachse der Lagerschale. Die Lagerschale besteht zumindest teilweise aus Holz. An beiden Querseiten weist die Lagerschale mindestens je ein seitliches Lastaufnahmemittel auf, das parallel zur Längsachse der Lagerschale und quer zur Längsachse eines aufgelegten Rohrs angeordnet ist. Im Ruhezustand ist die Lagerschale neben dem Auflageträger angeordnet. Ein Lastaufnahmemittel ist ein nicht zur Hebevorrichtung gehörendes Bauteil, das das Ergreifen einer Last ermöglicht. Die seitlichen Lastaufnahmemittel sind bevorzugt als Metall-Profilen ausgeführt, die seitlich an der Lagervorrichtung befestigt sind.

Das Rohr ist beispielweise ein Turmelement, wie ein Monopile, für eine Windkraftanlage und ist zylindrisch oder konisch ausgebildet bzw. hat zylindrische und konische Abschnitte. Das Rohrsicherungssystem dient zur Aufnahme von Rohren und Rohrschüssen mit einem Durchmesser von mindesten 6 m, bevorzugt einem Durchmesser von 8 bis 10 m. Auch die Aufnahme von Rohren mit größeren Durchmessern von z.B. 11,5 bis 12 m ist denkbar.

Die Lagerschale weist an ihrer Oberseite eine Fläche zur Aufnahme eines Rohrs auf, wobei diese Fläche bogenförmig ausgestaltet ist, um ein liegendes Rohr auf zu nehmen. Die Krümmung der Oberfläche führt zur Bildung einer Rinne, wobei die Krümmung an die Krümmung des aufliegenden Rohrs angepasst ist. Eine Rinne entspricht einem aufgeschnittenen Rohr oder einem Zylindersegment, wobei die Mantelfläche, der gebogene Teil der Oberfläche sich zum Boden der Lagerschale erstreckt und die Schnittfläche in einer Ebene mit der Oberseite der Lagerschale verläuft. Die rinnenförmige Ausnehmung ist bevorzugt in der Mitte der Lagerschale angeordnet, so dass der Abstand vom tiefsten Punkt der Rinne zu beiden Querseiten gleich groß ist. Der Bereich der Lagerschale mit der rinnenförmigen Ausnehmung ist durchgehend ausgeführt, d.h. die Oberfläche der rinnenförmigen Ausnehmung ist aus einem Stück gebildet.

Die gebogenen Flächen gewährleisten eine Abstützung des Rohrs über einen wesentlichen Abschnitt seiner Breite. Durch den Einsatz mehrerer Lagerschalen entlang der Länge des Rohrs, die senkrecht zu einer Längsmittelachse des Rohr angeordnet sind, ist eine gleichmäßige Kraftverteilung entlang der Rohrbreite und entlang der Rohrlänge möglich. Die gleichmäßige Kraftverteilung minimiert das Risiko einer mechanischen Beschädigung oder eines Einbeulens während des Aufladens, Abladens oder Transportierens.

Die Lagerschale weist bevorzugt eine durchgehende Oberfläche auf, die aus einem Teil, d.h. einteilig, monolithisch ausgebildet ist. Bevorzugt besteht die Lagerschale zumindest im Bereich unterhalb der rinnenförmigen Ausnehmung aus Vollmaterial. In einer bevorzugten Ausführungsform besteht die Lagerschale aus Holz, bevorzugt aus Brettschichtholz. Die Lagerschale kann auch aus Kunststoff, bspw. Polyurethan-Kunststoff, oder hybride Werkstoffen aus Holz und PU-Kunststoffbestehen. Der mittlere Steg der Lagerschale ist so gewählt, dass die Lagerschale bei äußerem Anheben mit der Hebevorrichtung genug Stabilität aufweist, jedoch nicht zu viel Freiraum unter dem Rohr in Anspruch nimmt. Die Lagerschale hat im Bereich der gebogenen Fläche einen Durchmesser, aus dem eine zulässige Beanspruchung des Rohrs resultiert, die bleibende plastische Verformungen beim Transport ausschließt. Für Rohre mit verschiedenen Durchmessern werden bevorzugt verschiedene Lagerschalen eingesetzt, deren rinnenförmige Ausnehmungen unterschiedliche Durchmesser aufweisen.

Die Lagervorrichtung hat bevorzugt die gleiche Höhe wie der Auflageträger oder ist höher als der Auflageträger je nach Platz unter dem Rohr, d.h. je nach Höhe des Freiraums zwischen der Rohrwandung und der Oberseite des Auflageträgers.

Die Rohrsicherungsvorrichtung wird auf einem modularen Schwerlastfahrzeug, einem sogenannten SPMT (Self-propelled Modular Transporter) verwendet. Diese modularen Schwerlastfahrzeuge sind Modulfahrzeug mit einem eigenen Antrieb, d.h. Selbstfahrer, mit mehreren Achsen.

In einer Ausführungsform weist das Rohrsicherungssystem eine Hebevorrichtung auf. Die Hebevorrichtung weist eine Aufnahme für das Lastaufnahmemittel auf, so dass die Hebevorrichtung das Lastaufnahmemittel anheben kann oder das Lastaufnahmemittel mit der Hebevorrichtung verbindbar ist. Die Aufnahme kann beispielsweise eine Platte oder ein Anschlagmittel sein. Die Hebevorrichtung ist bevorzugt elektrisch, mechanisch oder hydraulisch, besonders bevorzugt ein elektrischer, mechanischer oder hydraulischer Wagenheber. Die Hebevorrichtung kann an der Querseite der Ladevorrichtung und der Querseite des Auflageträgers neben dem Auflageträger angeordnet sein. Bei Ausführung als Wagenheber weist die Hebevorrichtung bevorzugt Rollen auf.

Das Rohrsicherungssystem hat einen Leerzustand in dem es nicht benutzt wird und kein Rohr auf dem Rohrsicherungssystem aufliegt und einen Betriebszustand in dem, ein Rohr auf dem Rohrsicherungssystem aufliegt und durch dieses gesichert wird. Die Lagerschale ist bevorzugt im Betriebszustand mittig auf dem Auflageträger angeordnet und weist bevorzugt den gleichen Abstand zu beiden Querseiten des Auflageträgers und den beiden Längsseiten des Auflageträgers auf. Die Lageschale liegt dabei vollflächig auf dem Auflageträger auf bzw. steht auf dem Auflageträger d.h. sie wird vollständig vom Querträger getragen ohne seitliche Überstände zur Verbesserung der Stabilität und der Krafteintragung.

In einer Ausführungsform weist der Auflageträger an seiner Oberseite Positionsmarker für die korrekte Position der Lagerschale auf dem Auflageträger auf.

Rohre aus Stahl, bevorzugt Baustahl, mit großen Durchmessern von mindestens 6 m, meist sogar 8 - 10 m, haben ein erhebliches Gewicht. Da die Rohre im Vergleich zu den großen Durchmessern und hohen Massen nur eine geringe Wanddicke aufweisen, besitzen sie eine geringe radiale Steifigkeit. Die reduzierte Wanddicke der Rohre erfordert eine Lagerung, sodass sich das Rohr nicht durch sein Eigengewicht plastisch deformiert oder verformt wird. Bei unsachgemäßer Lagerung sind Dellen bzw. Einbeulungen nicht ausgeschlossen. Außerdem darf bei der Lagerung auf einem modularen Schwerlastfahrzeug die zulässige Achslast pro Fahrzeug nicht überschritten werden. Eigene Berechnungen haben gezeigt, dass durch die Lagerschalen möglichst viele Lagerpunkte vorhanden sind, um einerseits das Rohr, andererseits auch die zulässige Achslast des Fahrzeugs nicht zu überschreiten. Darüber hinaus führt die Lagerschale zu einer verbesserten und homogeneren Lasteinleitung in die Schwerlastfahrzeug-Struktur.

Das erfindungsgemäße Verfahren zur Lagerung eines Rohrs auf einem modularen Schwerlastfahrzeug umfasst die Schritte:
a. Bereitstellen mindestens eines Rohrsicherungssystems auf einem modularen Schwerlastfahrzeug, wobei das Rohrsicherungssystem mindestens einen Auflageträger, mindestens eine Lagerschale pro Auflageträger und mindestens zwei Hebevorrichtung pro Lagerschale aufweist,
b. Positionieren je mindestens einer Lagerschale seitlich neben einem Auflageträger auf dem Schwerlastfahrzeug,
c. Fahren des Schwerlastfahrzeugs unter ein Rohr mit einem Rohrdurchmesser von mindestens 6 m,
d. Anheben der Lagerschale mittels der Hebevorrichtung,
e. Verschieben der Hebevorrichtungen und der Lagerschale in Rohrlängsrichtung in Richtung des Auflageträgers,
f. Positionieren der Lagerschale über dem Auflageträger und Ablassen auf den Auflageträger,
g. Wiederholen der Schritte a. bis g. für alle Lagerpunkte und
h. Ablassen des Rohrs auf die Lagerschalen oder Ausführen einer Hubbewegung des modularen Schwerlastfahrzeugs, sodass das Rohr vollständig in den Lagerschalen liegt und gleichmäßig gestützt wird.

An den Lagerschalen, bevorzugt vorwiegend aus Brettschichtholz, ist ein Lastaufnahmemittel, bevorzugt aus Metall-Profilen appliziert. Die Hebevorrichtung wird in einem äußeren Randbereich des Schwerlastfahrzeugs neben der Lagerschale relativ zum Lastaufnahmemittel positioniert. Die Lagerschalen, die vor dem Transport neben den Auflageträgern positioniert sind, können für die Benutzung mittels der Hebevorrichtung angehoben werden und durch eine seitliche Verschiebung der Hebevorrichtung auf den Querträgern geschoben werden. Anschließend wird die Lagerschale in korrekter Position z.B. mithilfe von Positionsmarkern an der korrekten mittigen Position abgelassen. Nach Abschluss dieser Verfahrensschritte für alle Lagerpunkte wird das Rohr abgelassen bzw. das Schwerlastfahrzeug vollführt eine Hubbewegung, sodass das Rohr vollständig in den Lagerschalen liegt und gleichmäßig gestützt wird.

Die Auflageträger bauen oben auf dem Schwerlastfahrzeug auf und reduzieren somit den Freiraum zwischen Querträger und Rohrwandung. Dieses führt zu Herausforderungen eine erforderliche Stützstruktur unter dem Rohr und auf den Querträgern zu platzieren, insbesondere beim Transport aus der Fertigung und wenn das Rohr auf den Lagerböcken platziert wurde. Die erfindungsgemäße Rohrsicherung und das erfindungsgemäße Verfahren ermöglichen trotz reduziertem Freiraum unter dem Rohr und der eingeschränkten Zugänglichkeit in der Fertigung ein platzsparendes System, dass ohne externe Hebezeuge, wie Stapler oder Krane auskommt und sowohl in einer Fertigungshalle als auch draußen im Freien verwendet werden kann.

Die Höhe eines Auflageträgers beträgt üblicherweise mind. 300 mm, was zu einem geringen Freiraum unterhalb des Rohr führt. Eine Lagerschale wird jeweils seitlich neben einem Auflageträger auf der Ladefläche eines Schwerlastfahrzeugs platziert, bevor das Schwerlastfahrzeug unter das Rohr fährt. Die Lagerschale mit bevorzugt einer vergleichbaren Höhe zum Auflageträger oder höher, je nach Platz zwischen Auflageträger und Rohrwandung, wird mittels einer Hebevorrichtung, wie z.B. einem Wagenheber, gehoben und mittels der Hebevorrichtung in Rohrlängsrichtung auf Rollen transversal verschoben und auf den Auflageträger positioniert. Die Rollen sind bevorzugt so ausgeführt, dass ein leichtgängiges und händisches Verschieben ermöglicht wird. Auf den Einsatz von schwerem Equipment, wie Stapler oder Kran kann somit verzichtet werden.

Die Erfindung wird anhand der Figuren weiter erläutert. Es zeigen:
- Fig. 1: ein modulares Schwerlastfahrzeug mit Rohr in einer Seitenansicht,
- Fig. 2: eine Schnittansicht zu Fig. 1,
- Fig. 3: eine perspektivische Ansicht zweier Rohrsicherungssysteme auf einer Ladefläche eines Schwerlastfahrzeugs,
- Fig. 4: eine halbschräge Ansicht zweier Rohrsicherungssysteme auf einer Ladefläche eines Schwerlastfahrzeugs,
- Fig5: eine halbschräge Ansicht zweier Rohrsicherungssysteme mit aufgelegtem Rohr,
- Fig. 6: seitliche Ansicht zweier Rohrsicherungssysteme mit und ohne Hebevorrichtung mit aufgelegtem Rohr,
- Fig. 7: eine Rückansicht eines Schwerlastfahrzeugs mit Rohrsicherungssystem und
- Fig. 8: eine Rückansicht eines Schwerlastfahrzeugs mit Rohrsicherungssystem und aufgelegtem Rohr.

Figur 1 zeigt ein Rohr 40 für eine Windkraftanlage, das auch als Monopile bezeichnet wird, aus mehreren Rohrschüssen 44, die miteinander verschweißt sind. Das Rohr 40 liegt auf zwei Drehvorrichtungen 42, die jeweils im Bereich der Rohrenden platziert sind. Unter dem Mittelbereich das Rohrs 40 ist ein modulares Schwerlastfahrzeug 30 platziert. Auf der Ladefläche 31 sind mehrere Auflageträger 2 angeordnet. Gemäß dem Stand der Technik wird das Rohr nach dem Absenken des Rohrs oder Anheben der Ladefläche des Schwerlastfahrzeugs auf den Auflageträger abgelegt und gelagert.

Figur 2 zeigt eine Schnittansicht zu Figur 1 entlang der Schnittlinie A-A. Die Rohrwandung 41 liegt auf zwei Rollen 43 der Drehvorrichtung 42. Auf der Ladefläche des modularen Schwerlastfahrzeugs 30 ist ein Auflageträger 2 angeordnet. Zwischen der Rohrwandung 41 und der Oberseite des Auflageträgers 2 ist ein Freiraum F zu erkennen. Das Schwerlastfahrzeug 30 ist mehrachsig und hat eine Vielzahl von Reifen 32.

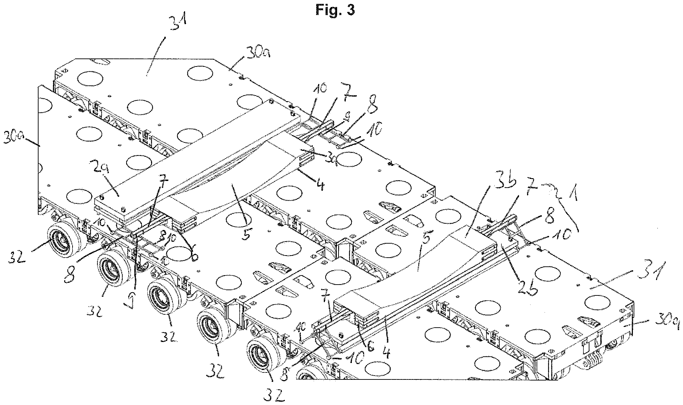

Figur 3 zeigt einen Ausschnitt aus einer Ladefläche 31 eines modularen Schwerlastfahrzeugs 30. Das Schwerlastfahrzeug ist aus mehreren Modulen 30a zusammengesetzt. Auf der Ladefläche 31 sind zwei Rohrsicherungssysteme 1 platziert. Das linke Rohrsicherungssystem 1 befindet sich im Leerzustand und das rechte Rohrsicherungssystem 1 befindet sich im Betriebszustand. Im Leerzustand ist neben einem Querträger 2a eine Lagerschale 3a platziert. Die Lagerschale 3a weist an ihrer Unterseite eine Standfläche 4 auf, die auf der Ladefläche 31 steht. An der Oberseite weist die Lagerschale eine Ausnehmung 5 auf, die in ihrer Krümmung der Krümmung der Rohrwandung entspricht, um das Roh aufnehmen zu können. An beiden Querseiten 6 der Lagerschale ist jeweils ein Lastaufnahmemittel 7 in Form eines Metallprofils befestigt. Unterhalb des Lastaufnahmemittels 7 ist jeweils eine Hebevorrichtung 8 angeordnet. In der Mitte hat die Hebevorrichtung eine Aufnahme 9 für das Lastaufnahmemittel 7 in Form einer Platte. Die Hebevorrichtung 8, hier ein Wagenheber, weist an ihren vier Ecken Rollen 10 auf. Das rechte Rohrsicherungssystem ist im Betriebszustand gezeigt. Auf dem Auflageträger 2b ist eine Lagerschale 3b angeordnet. Die Standfläche 4 der Lagerschale 3b steht auf dem Auflageträger 2b. Die seitlichen Lastaufnahmemittel 7 liegen jeweils auf den beiden Hebevorrichtungen 8, die neben den Auflageträger 2b gerollt sind.

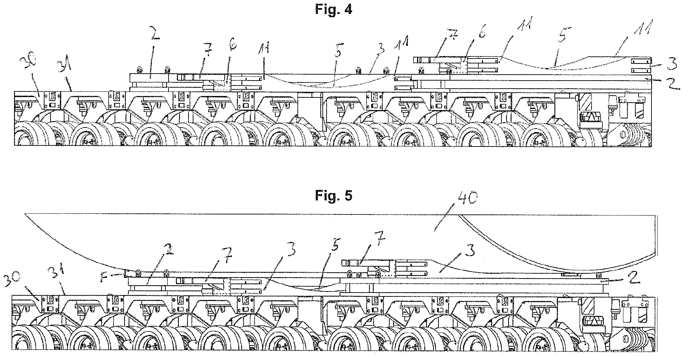

Figur 4 zeigt in einer halbschrägen Ansicht ebenfalls zwei Rohrsicherungssysteme auf der Ladefläche 31 eines modularen Schwerlastfahrzeugs 30. Bei beiden Rohrsicherungssystemen sind die Hebevorrichtungen nicht mit dargestellt. Das linke Rohrsicherungssystem 1 befindet sich im Leerzustand und das rechte Rohrsicherungssystem 1 befindet sich im Betriebszustand. Bei dem rechten Rohrsicherungssystem steht im Leerzustand neben dem Querträger 2 eine Lagerschale 3 platziert. Die Lagerschale 3 weist an der Oberseite eine Ausnehmung 5 auf. Die höheren Seitenbereiche der Lagerschale 11 neben der Ausnehmung haben die gleiche Höhe wie der Auflageträger 2. An beiden Querseiten 6 der Lagerschale ist jeweils ein Lastaufnahmemittel 7 in Form eines Metallprofils befestigt, dessen Oberseite hier ebenfalls mit der Oberseite der nicht ausgehöhlten Seitenbereiche 11 entspricht. Das rechte Rohrsicherungssystem ist im Betriebszustand gezeigt. Die Lagerschale 3 steht auf dem Auflageträger 2. Die Standfläche 4 der Lagerschale 3 steht auf dem Auflageträger 2.

Figur 5 zeigt die beiden Rohrsicherungssysteme aus Figur 4 in der gleichen Perspektive allerdings mit Rohr. Das rechte Rohrsicherungssystem im Betriebszustand trägt das Rohr, dass in der Ausnehmung 5 der Lagerschale 3 liegt. Bei dem linken Rohrsicherungssystem im Leerzustand ist der Freiraum F zwischen der Rohrwandung und dem Auflageträger 2 erkennbar.

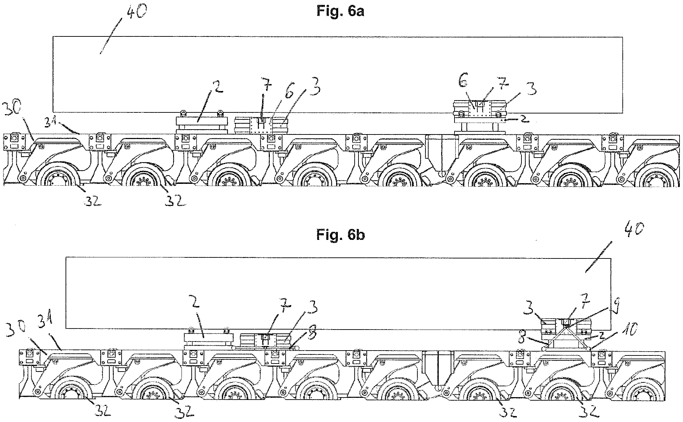

In Figur 6a und 6b ist eine Seitenansicht von zwei Rohrsicherungssystemen im Betriebszustand und im Leerzustand gezeigt. In Figur 6a sind die Rohrsicherungssysteme ohne Hebevorrichtung dargestellt. Bei dem linken Rohrsicherungssystem steht die Lagerschale 3 neben dem Auflageträger 2 auf der Ladefläche 31. Die Lagerschale hat die gleiche Höhe, wie der Auflageträger. Bei dem rechten Rohrsicherungssystem im betriebszustand ist die Lagerschale 3 auf dem Auflageträger 2 und das Rohr 40 liegt in der Lagerschale. Das Rohr 40 ist hier nur ausschnittsweise dargestellt. Auch in Figur 6b ist das Rohr 40 nur ausschnittsweise dargestellt. Zusätzlich sind in Figur 6b die Hebevorrichtungen 8 dargestellt. Bei dem linken Rohrsicherungssystem steht die Hebevorrichtung 8 zusammengefaltet neben der Lagerschale 3. Bei dem rechten Rohrsicherungssystem ist die Hebevorrichtung 8 neben dem Querträger 2 platziert und das Lastaufnahmemittel 7 der Lagerschale liegt noch auf der Hebevorrichtung 8.

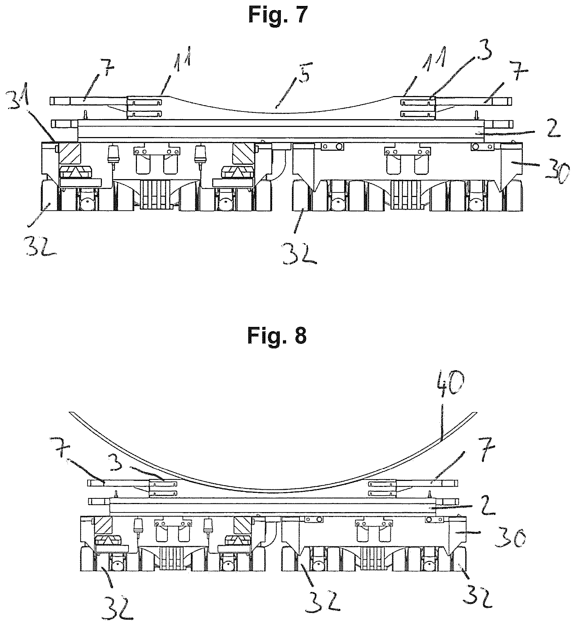

Figur 7 zeigt ein Rohrsicherungssystem in einer Rückansicht ohne aufgelegtes Rohr. Die Lagerschale 3 steht auf dem Auflageträger 2, der wiederum auf der Ladefläche 31 des Schwerlastfahrzeugs steht. Im mittleren Bereich weist die Lagerschale 3 eine Ausnehmung 5 auf, während die beiden Seitenbereiche 11 erhöht sind. An den Querseiten sind die Lastaufnahmemittel 7 angebracht. Figur 8 zeigt die gleiche Ansicht wie Figur 7, wobei zusätzlich ausschnittsweise ein Rohr 40 dargestellt ist, dass in der Lagerschale 3 liegt. Durch die Krümmung der Lagerschale im Bereich der Ausnehmung ist das Rohr sowohl gegen ein Wegrollen als auch gegen mechanische Beschädigungen gesichert.

Sowohl aus Figur 5 als auch aus den Figuren 6 und 7 ist erkennbar, dass der Freiraum zwischen Auflageträger und Rohr nur sehr gering ist und es deshalb schwierig ist, eine Sicherung für das Rohr unter dem Rohr oder im Rohrschatten zu platzieren. Dieses Problem wird durch die Lagerschale gelöst, die mittels der Hebevorrichtung in dem engen Raum bewegt werden kann und auf den Auflageträger unter das Rohr geschoben wird.

Die Erfindung ist nicht auf eine der vorbeschriebenen Ausführungsformen beschränkt, sondern in vielfältiger Weise abwandelbar.

### Bezugszeichenliste

- 1: Rohrsicherungssystem
- 2: Auflageträger
- 3: Lagervorrichtung
- 4: Standfläche
- 5: Ausnehmung
- 6: Querseite
- 7: seitliches Lastaufnahmemittel
- 8: Hebevorrichtung
- 9: Aufnahme für das Lastaufnahmemittel
- 10: Rolle
- 11: Seitenbereich Lagerschale
- 30: modulares Schwerlastfahrzeug
- 31: Ladefläche
- 32: Reifen
- 40: Rohr
- 41: Rohrwandung
- 42: Drehvorrichtung
- 43: Rolle Drehvorrichtung
- 44: Rohrschüsse
- F: Freiraum

## Patentansprüche

1. Rohrsicherungssystem (1) für Schwerlastfahrzeuge aufweisend
- mindestens einen Auflageträger (2), wobei der Auflageträger (2) zumindest teilweise plattenförmig oder quaderförmig ist,
- mindestens eine Lagervorrichtung (3), die im Lagerzustand auf dem Auflageträger (2) angeordnet ist,
wobei der Auflageträger (2) eine Tragelast von mindestens von 500 t hat,
**dadurch gekennzeichnet, dass**
- die Lagervorrichtung (3) eine Lagerschale ist,
- die Lagerschale (3) eine Unterseite und eine Oberseite und zwei schmale Querseiten (6) hat, die die Unterseite und die Oberseite verbinden, wobei die Unterseite der Lagerschale (3) eine Standfläche (4) bildet und die Oberseite der Lagerschale (3) eine rinnenförmige Ausnehmung (5) aufweist, um ein liegendes Rohr (40) auf zu nehmen,
- die Lagerschale (3) zumindest teilweise aus Holz besteht und
- die Lagervorrichtung (3) an beiden Querseiten (6) mindestens je ein seitliches Lastaufnahmemittel (7) hat, das parallel zur Längsachse der Lagerschale (3) und quer zur Längsachse eines aufgelegten Rohrs (40) angeordnet ist.

2. Rohrsicherungssystem (1) gemäß Patentanspruch 1, **dadurch gekennzeichnet, dass** das Rohrsicherungssystem (1) eine Hebevorrichtung (8) aufweist und die Hebevorrichtung **(8) eine** Aufnahme (9) für das Lastaufnahmemittel (7) aufweist, so dass die Hebevorrichtung das Lastaufnahmemittel anheben kann oder das Lastaufnahmemittel (7) mit der Hebevorrichtung (8) verbindbar ist.

3. Rohrsicherungssystem (1) gemäß Patentanspruch 1 oder 2, **dadurch gekennzeichnet, dass** die Lagerschale (3) eine durchgehende Oberfläche aufweist und bevorzugt zumindest im Bereich unterhalb der rinnenförmigen Ausnehmung (5) aus Vollmaterial besteht.

4. Rohrsicherungssystem (1) gemäß Patentanspruch 3, **dadurch gekennzeichnet, dass** die Lagerschale (3) aus Holz, bevorzugt aus Brettschichtholz, besteht.

5. Rohrsicherungssystem (1) gemäß einem der vorhergehenden Patentansprüche, **dadurch gekennzeichnet, dass** die Lagervorrichtung (3) die gleiche Höhe wie der Auflageträger (2) hat oder höher ist. (je nach Platz)

6. Rohrsicherungssystem (1) gemäß einem der vorhergehenden Patentansprüche, **dadurch gekennzeichnet, dass** die seitlichen Lastaufnahmemittel (7) als Metall-Profile ausgeführt sind, die seitlich an der Lagervorrichtung (3) befestigt sind.

7. Rohrsicherungssystem (1) gemäß einem der vorhergehenden Patentansprüche, **dadurch gekennzeichnet, dass** die Hebevorrichtung (8) elektrisch, mechanisch oder hydraulisch ist, bevorzugt ein elektrischer, mechanischer oder hydraulischer Wagenheber.

8. Rohrsicherungssystem (1) gemäß einem der vorhergehenden Patentansprüche, **dadurch gekennzeichnet, dass** die Hebevorrichtung (8) an der Querseite (6) der Lagerschale neben der Lagerschale (3) angeordnet ist und bevorzugt Rollen (10) aufweist.

9. Rohrsicherungssystem (1) gemäß einem der vorhergehenden Patentansprüche, **dadurch gekennzeichnet, dass** die Lagerschale (3) im Betriebszustand mittig auf dem Auflageträger (2) angeordnet ist und bevorzugt den gleichen Abstand zu beiden Querseiten (6) des Auflageträgers und den beiden Längsseiten des Auflageträgers aufweist und vollflächig auf dem Auflageträger (2) aufliegt oder aufsteht.

10. Rohrsicherungssystem (1) gemäß einem der vorhergehenden Patentansprüche, **dadurch gekennzeichnet, dass** der Auflageträger (2) an seiner Oberseite Positionsmarker für die korrekte Position der Lagerschale (3) auf dem Auflageträger (2) aufweist.

11. Verfahren zur Lagerung eines Rohrs (40) auf einem modularen Schwerlastfahrzeug (30) umfassend die Schritte:
a. Bereitstellen mindestens eines Rohrsicherungssystems (1) gemäß einem der Patentansprüche 1 bis 10 auf einem modularen Schwerlastfahrzeug (30) unterhalb eines Rohrs (40) mit einem Rohrdurchmesser von mindestens 6 m, wobei das Rohrsicherungssystem (1) mindestens einen Auflageträger (2), mindestens eine Lagerschale (3) pro Auflageträger und mindestens zwei Hebevorrichtung (8) pro Lagerschale (3) aufweist,
b. Positionieren je mindestens einer Lagerschale (3) seitlich neben einem Auflageträger (2) auf dem Schwerlastfahrzeug (30),
c. Fahren des Schwerlastfahrzeugs (30) unter ein Rohr (40) mit einem Rohrdurchmesser von mindestens 6 m,
d. Anheben der Lagerschale (3) mittels der Hebevorrichtung (8),
e. Verschieben der Hebevorrichtungen (8) und der Lagerschale (3) in Rohrlängsrichtung in Richtung des Auflageträgers (2),
f. Positionieren der Lagerschale (3) über dem Auflageträger (2) und Ablassen auf den Auflageträger (2),
g. Wiederholen der Schritte a. bis g. für alle Lagerpunkte und
h. Ablassen des Rohrs (40) auf die Lagerschalen (3) oder Ausführen einer Hubbewegung des modularen Schwerlastfahrzeugs (30), sodass das Rohr (40) vollständig in den Lagerschalen (3) liegt und gleichmäßig gestützt wird.

## Claims

1. Pipe securing system (1) for heavy-duty vehicles, comprising
- at least one support member (2), wherein the support member (2) is at least partially platelike or cuboid,
- at least one bearing device (3) which is arranged on the support member (2) in the bearing state, wherein the support member (2) has a carrying load of at least 500 t,
**characterized in that**
- the bearing device (3) is a bearing shell,
- the bearing shell (3) has a bottom side and a top side and two narrow transverse sides (6) which connect the bottom side and the top side, wherein the bottom side of the bearing shell (3) forms a standing surface (4) and the top side of the bearing shell (3) has a trough-like recess (5) in order to receive a horizontal pipe (40),
- the bearing shell (3) at least partially consists of timber, and
- the bearing device (3) comprises, on both transverse sides (6), at least one respective lateral load receiving means (7) which is arranged parallel to the longitudinal axis of the bearing shell (3) and transverse to the longitudinal axis of a placed-on pipe (40).

2. Pipe securing system (1) according to Patent Claim 1, **characterized in that** the pipe securing system (1) comprises a lifting device (8) and the lifting device (8) comprises a receptacle (9) for the load receiving means (7), such that the lifting device can raise the load receiving means or the load receiving means (7) is connectable to the lifting device (8).

3. Pipe securing system (1) according to Patent Claim 1 or 2, **characterized in that** the bearing shell (3) has a continuous surface and preferably consists of solid material at least in the region below the trough-like recess (5).

4. Pipe securing system (1) according to Patent Claim 3, **characterized in that** the bearing shell (3) consists of timber, preferably of glued laminated timber.

5. Pipe securing system (1) according to one of the preceding patent claims, **characterized in that** the bearing device (3) has the same height as or is higher than the support member (2).

6. Pipe securing system (1) according to one of the preceding patent claims, **characterized in that** the lateral load receiving means (7) are embodied as metal profiles which are laterally fastened to the bearing device (3).

7. Pipe securing system (1) according to one of the preceding patent claims, **characterized in that** the lifting device (8) is electrical, mechanical or hydraulic, preferably an electrical, mechanical or hydraulic jack.

8. Pipe securing system (1) according to one of the preceding patent claims, **characterized in that** the lifting device (8) is arranged at the transverse side (6) of the bearing shell next to the bearing shell (3) and preferably comprises rollers (10).

9. Pipe securing system (1) according to one of the preceding patent claims, **characterized in that** the bearing shell (3) is arranged centrally on the support member (2) in the operating state and is preferably at the same distance from both transverse sides (6) of the support member and the two longitudinal sides of the support member and rests or stands on the support member (2) in a full-area manner.

10. Pipe securing system (1) according to one of the preceding patent claims, **characterized in that** the support member (2) has, on its top side, position markers for the correct position of the bearing shell (3) on the support member (2).

11. Method for supporting a pipe (40) on a modular heavy-duty vehicle (30), comprising the steps:
a. providing at least one pipe securing system (1) according to one of Patent Claims 1 to 10 on a modular heavy-duty vehicle (30) below a pipe (40) having a pipe diameter of at least 6 m, wherein the pipe securing system (1) comprises at least one support member (2), at least one bearing shell (3) per support member, and at least two lifting devices (8) per bearing shell (3),
b. positioning in each case at least one bearing shell (3) laterally next to a support member (2) on the heavy-duty vehicle (30),
c. driving the heavy-duty vehicle (30) under a pipe (40) having a pipe diameter of at least 6 m,
d. raising the bearing shell (3) by means of the lifting device (8),
e. displacing the lifting devices (8) and the bearing shell (3) in a pipe longitudinal direction towards the support member (2),
f. positioning the bearing shell (3) above the support member (2) and unloading it onto the support member (2),
g. repeating steps a. to g. for all bearing points, and
h. unloading the pipe (40) onto the bearing shells (3) or carrying out a lifting movement of the modular heavy-duty vehicle (30), such that the pipe (40) lies completely in the bearing shells (3) and is uniformly supported.

## Revendications

1. Système (1) de fixation de tube pour véhicules poids lourds, présentant
- au moins un support d'appui (2), le support d'appui (2) étant au moins partiellement en forme de plaque ou de parallélépipède,
- au moins un dispositif de support (3), qui est agencé sur le support d'appui (2) à l'état de support,
le support d'appui (2) ayant une charge portante d'au moins 500 t,
**caractérisé en ce que**
- le dispositif de support (3) est une garniture de support,
- la garniture de support (3) a un côté inférieur et un côté supérieur et deux côtés transversaux étroits (6) qui relient le côté inférieur et le côté supérieur, le côté inférieur de la garniture de support (3) formant une surface d'appui (4) et le côté supérieur de la garniture de support (3) présentant un évidement (5) en forme de gouttière pour recevoir un tube couché (40),
- la garniture de support (3) est au moins partiellement en bois, et
- le dispositif de support (3) présente, sur chacun de ses deux côtés transversaux (6), au moins un moyen latéral (7) de réception de charge qui est agencé parallèlement à l'axe longitudinal de la garniture de support (3) et transversalement à l'axe longitudinal d'un tube (40) posé sur celle-ci.

2. Système (1) de fixation de tube selon la revendication 1, **caractérisé en ce que** le système (1) de fixation de tube présente un dispositif de levage (8) et le dispositif de levage (8) présente un logement (9) pour le moyen latéral (7) de réception de charge, de sorte que le dispositif de levage puisse soulever le moyen de réception de charge ou que le moyen latéral (7) de réception de charge soit apte à être relié au dispositif de levage (8).

3. Système (1) de fixation de tube selon la revendication 1 ou la revendication 2, **caractérisé en ce que** la garniture de support (3) présente une surface continue et est de préférence constituée d'un matériau plein au moins dans la zone située en dessous de l'évidement (5) en forme de gouttière.

4. Système (1) de fixation de tube selon la revendication 3, **caractérisé en ce que** la garniture de support (3) est en bois, de préférence en bois lamellécollé.

5. Système (1) de fixation de tube selon l'une des revendications précédentes, **caractérisé en ce que** le dispositif de support (3) a la même hauteur que le support d'appui (2) ou est plus haut.

6. Système (1) de fixation de tube selon l'une des revendications précédentes, **caractérisé en ce que** le moyen latéral (7) de réception de charge est réalisé sous forme de profilés métalliques qui sont fixés latéralement au dispositif de support (3).

7. Système (1) de fixation de tube selon l'une des revendications précédentes, **caractérisé en ce que** le dispositif de levage (8) est électrique, mécanique ou hydraulique, de préférence un cric électrique, mécanique ou hydraulique.

8. Système (1) de fixation de tube selon l'une des revendications précédentes, **caractérisé en ce que** le dispositif de levage (8) est agencé sur le côté transversal (6) de la garniture de support, à côté de la garniture de support (3), et présente de préférence des rouleaux (10).

9. Système (1) de fixation de tube selon l'une des revendications précédentes, **caractérisé en ce que** la garniture de support (3) est agencée au centre du support d'appui (2) à l'état de fonctionnement et présente de préférence la même distance par rapport aux deux côtés transversaux (6) du support d'appui et aux deux côtés longitudinaux du support d'appui et repose ou se dresse sur toute sa surface sur le support d'appui (2).

10. Système (1) de fixation de tube selon l'une des revendications précédentes, **caractérisé en ce que** le support d'appui (2) présente sur sa face supérieure des marqueurs de position pour la position correcte de la garniture de support (3) sur le support d'appui (2).

11. Procédé de support d'un tube (40) sur un véhicule modulaire lourd (30) comprenant les étapes suivantes :
a. fourniture d'au moins un système (1) de fixation de tube selon l'une des revendications 1 à 10 sur un véhicule modulaire lourd (30) en dessous d'un tube (40) ayant un diamètre de tube d'au moins 6m, le système (1) de fixation de tube présentant au moins un support d'appui (2), au moins une garniture de support (3) par support d'appui et au moins deux dispositifs de levage (8) par garniture de support (3),
b. positionnement d'au moins une garniture de support (3) sur le côté d'un support d'appui (2) sur le véhicule lourd (30),
c. déplacement du véhicule lourd (30) sous un tube (40) d'un diamètre d'au moins 6m,
d. soulèvement de la garniture de support (3) au moyen du dispositif de levage (8),
e. déplacement des dispositifs de levage (8) et de la garniture de support (3) dans le sens de la longueur du tube en direction du support d'appui (2),
f. positionnement de la garniture de support (3) au-dessus du support d'appui (2) et descente sur le support d'appui (2),
g. répétition des étapes a. à g. pour tous les points d'appui et
h. abaissement du tube (40) sur les garnitures de support (3) ou exécution d'un mouvement de levage du véhicule modulaire lourd (30) de sorte que le tube (40) repose entièrement dans les garnitures de support (3) et soit soutenu de manière uniforme.
